# EUROPEAN PATENT APPLICATION

(11) **EP 4 019 808 A1**
(43) Date of publication of application: **29.06.2022**
(21) Application number: 20020639.9
(22) Date of filing: 22.12.2020
(51) Int. Cl.: F16H 9/04, F16H 37/02, F16H 37/04, B60K 6/543, F16H 48/20

(54) **VARIABLE TRANSMISSION WITH A VARIATOR UNIT FOR AN ELECTRIC VEHICLE AND CONTROL METHOD FOR IT**

(71) Applicant: Robert Bosch GmbH, 70442 Stuttgart (DE)
(72) Inventor: VAN DEN BOER, Matijs, 5000AM Tilburg (NL)
(74) Representative: Plevier, Gabriël Anton Johan Maria

(57) **Abstract**

The invention relates to a variable transmission (3) for an electric vehicle and comprising a variator unit (40) for providing a continuously variable speed ratio between an input shaft (44) and an output shaft (45) thereof. According to the invention, the variable transmission (3) further comprises two planetary gear sets (50) respectively provided on a respective axial side of the output shaft (45) and each comprising three coaxially rotatable members (51, 52, 53) including a sun gear (51), a ring gear (52) and a planet carrier (53) rotatably carrying planet gears (54), whereof first members (51, 52, 53) rotate as one with the output shaft (45), whereof second members (51, 52, 53) respectively rotate as one with a respective one of the two driven wheels (2) and whereof third members (51, 52, 53) of each of the planetary gear sets (50) are connectable to a stationary part (39) of the variable transmission (3) via a respective clutch (55).

## Description

The present invention relates to a variable transmission for an electric vehicle, in particular a passenger car, with an electric machine that is also known as motor/generator-unit (MGU) and with two or more driven wheels, in which electric vehicle the variable transmission drivingly connects, i.e. rotationally couples, the electric machine to the driven wheels at a continuously variable transmission speed ratio. Within the context of the present disclosure the term electric vehicle is to be understood as referring to a vehicle with an electric powertrain, such as battery electric vehicles (BEV) and fuel cell electric vehicles (FCEV), which electric vehicle powertrain includes the electric machine as a prime mover of the said two driven wheels, but does, in particular, not include an internal combustion engine that is, or at least can be, connected to the said two driven wheels in addition to or instead of the electric machine.

The variable transmission according to the present invention is provided with a variator unit for setting a speed ratio between an input shaft and an output shaft thereof that is infinitely variable within a range of speed ratios.

In a widely applied embodiment thereof, the variator unit comprises two, adjustable pulleys, each pulley provided on and rotating as one with a respective one of the said input and output shafts, and a drive belt wrapped around the pulleys at an adjustable, effective radius at each pulley. The ratio between these effective belt radii at the two pulleys determines the speed ratio of the variator unit that can be varied by adjusting the pulleys. Such a variable transmission and electric vehicle provided therewith is well-known and is for example described in the European patent No. EP0572279B1 and more recently in the international patent application publication No. WO2020/057779A1.

In the electric vehicle the electric machine may be directly connected to and rotate as one with the input shaft of the variator unit, as illustrated in EP0572279B1, but it is also known to apply a geared speed reduction there between as part of the variable transmission. Such an input speed reduction is illustrated in WO2020/057779A1. In any case, a geared speed reduction is normally applied in the variable transmission between the output shaft of the variator unit and the driven wheels, to account the rotational speed difference between the said output shaft and the driven wheels. Such an output speed reduction is illustrated in both WO2020/057779A1 and EP0572279B1.

Also in the electric vehicle, a differential is applied as part of the variable transmission between the output shaft of the variator unit and the driven wheels, in particular between the output speed reduction and the driven wheels, for allowing the driven wheels to rotate at mutually different speeds when cornering, while being driven by or driving the electric machine. The differential is, as such, well-known and widely applied. In one known embodiment thereof, the differential is constructed from two, co-axially arranged and rotationally connected, epicyclic or planetary gear sets. However, in the archetypical embodiment thereof, that is schematically illustrated in EP0572279B1, the differential is constructed with bevel gears.

The known variable transmission greatly contributes to the acceleration performance and top speed of the electric vehicle and, moreover, can also improve the overall operating efficiency thereof. It does, however, come with the limitation that it takes up considerable space in the electric vehicle. In particular in case of the above-described belt-and-pulleys-type variator unit, the pulleys are mutually spaced in radial direction as well as relative to the rotation axis of the driven wheels and/or of the electric machine to accommodate the said geared speed reduction(s) and the differential of the variable transmission. Of course, the drawing figures of WO2020/057779A1 and EP0572279B1 exacerbate this latter aspect of the known variable transmission by providing only the "unfolded" 2D representation of a typically tightly packed 3D design thereof. Nevertheless, according to the present invention, the known variable transmission can be improved upon towards a more compact design thereof, in particular in terms of its dimension in radial direction.

According to the present invention, the differential and output speed reduction of the variable transmission is embodied by two planetary gear sets that are respectively provided on a respective axial side of the output shaft of the variator unit, preferably coaxial therewith, which planetary gear sets each comprise three coaxially rotatable members including a central sun gear, an outer ring gear and a planet carrier that rotatably carries one or more planet gears located between and meshing with both the sun gear and the ring gear, whereof first members of each of the planetary gear sets are rotationally connected to and rotate as one with the output shaft of the variator unit, whereof second members of each of the planetary gear sets can be rotationally connected to and rotate as one with a respective one of the two driven wheels of the electric vehicle and whereof third members of each of the planetary gear sets are connectable to a stationary part of the variable transmission via a respective clutch. In particular, the clutches are controllable such that these can be maintained in a fully closed state, wherein the respective third member is prevented from rotating, or in a slipping or fully opened state, wherein the respective third member can rotate relative to the said stationary transmission part. The clutch slip -and thus the friction that is exerted by the clutch on a respective third member- is preferably hydraulically controllable, if the pulleys are hydraulically adjusted as well, or is preferably mechanically controllable, if the adjustable pulleys are mechanically adjusted as well.

When the clutches of the two planetary gear sets are closed, i.e. when the said third members thereof are both locked, i.e. cannot rotate, the two driven wheels rotate at the same speed (i.e. so-called differential lock), whereas when at least one of the clutches is controlled to slip or is fully opened, the driven wheels can have different rotational speeds, as is required when the electric vehicle is cornering. By thus combining the differential and output speed reduction functions in the planetary gear sets, the novel variable transmission allows for a favourably compact design thereof.

In particular, when the electric vehicle is driven by the electric machine, preferably the clutch of the planetary gear set that is associated with the inner driven wheel in cornering is controlled to slip, whereas during regenerative braking of the electric vehicle (i.e. when the electric machine is being driven by the inertia of the electric vehicle), preferably the clutch of the planetary gear set that is associated with the outer driven wheel in cornering is controlled to slip. In fact, to minimise power loss through friction in the respectively slipping clutch, it is fully opened, in which case no drive force, i.e. no torque is transmitted to or from the respective driven wheel. However, in a more sophisticated control method the amount of slip, i.e. the slip speed of the slipping clutch is actively controlled, such that oversteer or understeer of the electric vehicle can be favourably introduced in a controlled manner (i.e. so-called torque steering). In particular, the clutch slip speed is preferably controlled in relation to at least the torque that is to be received or generated by each driven wheel. Preferably also one or more further control parameters are taken into account, such as the (individual) rational speeds of the driven wheels, a steering angle of the front wheels of the electric vehicle (that can be the same as the said two driven wheels), an angular speed of the electric vehicle, or the (individual) rational speeds of the driven wheels.

Furthermore, the clutches are preferably actively controlled not only when these are slipping, but also when these are closed. In particular, the clutches are controlled with a safety margin between a torque that is actually transmitted thereby and a maximum torque that can be instantaneously transmitted by the clutches, which clutch safety margin that is smaller than a further safety margin that is applied between a torque that is actually transmitted by the variator unit and a maximum torque that can be instantaneously transmitted by the variator unit. In this way, if a torque spike (i.e. a sudden and/or unanticipated increase in the torque level) occurs in the powertrain, a resulting slip favourably occurs in the clutches rather than in the variator unit that is more susceptible to be damaged by such slip. Alternatively, but to the same effect, the clutches are not controlled to fully close, but rather are controlled to slip also when the two driven wheels rotate at the same speed, i.e. also when the electric vehicle is not cornering. Preferably such latter controlled clutch slip is as small as possible (e.g. only a few rpm or less) to minimise the power loss in the clutches. Effectively, this latter control method is a convenient way control the clutches of the two planetary gear sets, since it is easier to measure, i.e. to detect, and control the clutch slip than it is to control the said clutch safety margin in relation to the torque that is transmitted by the clutch. In this latter control method, the clutch slip of a respective one of the two clutches is controlled to increase relative to the clutch slip of the respective other one clutch when the electric vehicle is cornering.

In a preferred, more detailed embodiment of the variable transmission according to the present invention, the said first members of the planetary gear sets are the sun gears thereof, the said second members of the planetary gear sets are the planet carriers thereof and the said third members of the planetary gear sets are the ring gears thereof.

The variable transmission according to the present invention is explained in more detail hereinafter by means of non-limiting, illustrative embodiments thereof and with reference to the drawing, in which:
- figure 1 is a schematic representation of the basic functional arrangement of the main components of a known electric vehicle powertrain with an electric machine and a variable transmission including a variator unit; and
- figure 2 schematically depicts the variable transmission according to the present invention in the electric vehicle powertrain, illustrating the relevant components thereof and the preferred functional relationship there between.

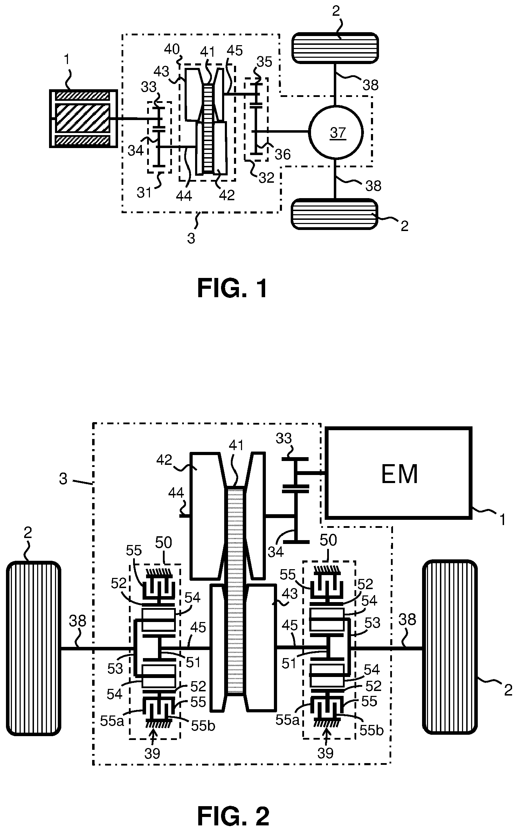

Figure 1 shows a basic example of a known powertrain for an electric vehicle such as a battery electric passenger vehicle. In addition to a battery and power electronics (not shown) for powering an electric machine 1 and/or for storing electric power generated by the electric machine 1, the known electric vehicle powertrain comprises such electric machine 1, two driven wheels 2 of the electric vehicle and a variable transmission 3 that drivingly connects the electric machine 1 to the driven wheels 2 via respective half shafts 38. In the specific embodiment of figure 1 thereof, the known variable transmission 3 includes a variator unit 40 that provides a continuously variable speed ratio between an input shaft 44 and an output shaft 45 thereof. The known variable transmission 3 further includes a differential 37 for allowing the driven wheels 2 to rotate at different speeds, an input speed reduction 31 between the electric machine 1 and the variator unit 40 and an output speed reduction 32 between the variator unit 40 and the differential 37, each composed of a pair of meshing gears 33, 34 and 35, 36 respectively, for increasing the operating speed of the electric machine 1 relative to the driven wheels 2. In this respect it is noted that at least the input speed reduction 31 is not an essential feature of the known variable transmission 3.

The variator unit 40 is, as such, well-known, in particular in the form comprising a drive belt 41 that is wrapped around and in frictional contact with both an input pulley 42 on the input shaft 44 and an output pulley 43 on the output shaft 45. An effective radius of the friction contact between the drive belt 41 and a pulley 42, 43 can be varied in mutually opposite directions between the two pulleys 42, 43 by means of a control and actuation system (not shown) of the variator unit 40 to vary the said speed ratio thereof between a most decelerating ratio, i.e. Low, and a most accelerating ratio, i.e. Overdrive. By including the variator unit 40 in the electric vehicle powertrain several advantages and/or optimisation strategies are unlocked. For example, the take-off acceleration and/or top speed of the electric vehicle can be increased thereby. Alternatively, these vehicle performance parameters can be maintained at the same level, while applying an electric machine 1 that is downsized in terms of, for example, its maximum torque generating capability.

The present invention sets out to improve the known variable transmission 3 in terms of the installation space that it requires in the electric powertrain. In figure 2, a novel variable transmission 3 according to the present invention is illustrated in a preferred embodiment thereof. In the novel variable transmission 3 the output pulley 43 and the output shaft 45 are arranged coaxially with the half shafts 38 and driven wheels 2 of the electric vehicle. The output speed reduction 32 and the differential 37 of the known variable transmission 3 are replaced by two planetary gear sets 50, one on either axial side of output pulley 43. Each such planetary gear set 50 comprises three coaxially rotatable members 51, 52, 53, including a central sun gear 51, an outer ring gear 52 and a planet carrier 53 that rotatably carriers one or more planet gears 54 located between and meshing with both the sun gear 51 and the ring gear 52. The sun gears 51 of the planetary gear sets 50 are each rotationally connected to and rotate as one with the output shaft 45 of the variator unit 40. The planet carriers 53 of the planetary gear sets 50 are each rotationally connected to and rotate as one with a respective one of the said half shafts 38. The ring gears 52 of the planetary gear sets 50 are each connected to a stationary part 39 of the variable transmission 3 via a respective clutch 55.

In figure 2 the clutches 55 are schematically represented in the form of well-known plate clutches 55 by way of example. The clutches 55 each include two sets of ring-shaped clutch plates 55a, 55b. A first set of clutch plates 55a is attached to the respective ring gear 52 and a second set of clutch plates 55b is attached to the said stationary transmission part 39. The clutches 55 can be closed to rotationally lock the respective ring gear 52, or opened to allow rotation thereof by allowing the sets of clutch plates 55a, 55b to slip relative to one another. The amount of slip between the sets of clutch plates 55a, 55b, i.e. the friction exerted on a respective ring gear 52 by a respective clutch 55 can be controlled, typically by means of a controlled hydraulic pressure.

When the clutches 55 of the two planetary gear sets 50 are closed, the ring gears 52 thereof cannot rotate and the two driven wheels 2 rotate at the same speed, whereas when at least one of the clutches 55 is controlled to slip, i.e. when it is partly or fully opened, the driven wheels 2 can have different rotational speeds, as is required when the electric vehicle is cornering. By thus combining the differential and output speed reduction functions of the variable transmission 3 in the said planetary gear sets 50 thereof, a favourably compact design thereof is provided.

The present invention, in addition to the entirety of the preceding description and all details of the accompanying figures, also concerns and includes all of the features of the appended set of claims. Bracketed references in the claims do not limit the scope thereof, but are merely provided as a non-limiting example of a respective feature. Separately claimed features can be applied separately in a given product, or in a given process as the case may be, but these can also be applied simultaneously therein in any combination of two or more of such features.

The invention is not limited to the embodiments and/or the examples that are explicitly mentioned herein, but also encompasses straightforward amendments, modifications and practical applications thereof that lie within reach of the person skilled in the relevant art.

## Claims

1. A variable transmission (3) for an electric vehicle, in particular a passenger car, with an electric machine (1) and with two or more driven wheels (2), in which electric vehicle the variable transmission (3) drivingly connects, i.e. rotationally couples, the electric machine (1) to the driven wheels (2), which variable transmission (3) comprises a variator unit (40) for providing a speed ratio between an input shaft (44) and an output shaft (45) of the variator unit (40) that is continuously variable within a range of speed ratios, **characterised in that** the variable transmission (3) further comprises two planetary gear sets (50) that are respectively provided on a respective axial side of the output shaft (45) of the variator unit (40), preferably coaxial therewith, and that each comprise three coaxially rotatable members (51, 52, 53) including a central sun gear (51), an outer ring gear (52) and a planet carrier (53) that rotatably carries one or more planet gears (54) located between and meshing with both the sun gear (51) and the ring gear (52), whereof first members (51; 52; 53) of each of the planetary gear sets (50) are rotationally connected to and rotate as one with the output shaft (45) of the variator unit (40), whereof second members (51; 52; 53) of each of the planetary gear sets (50) can be rotationally connected to and rotate as one with a respective one of the two driven wheels (2) and whereof third members (51; 52; 53) of each of the planetary gear sets (50) are connectable to a stationary part (39) of the variable transmission (3) via a respective clutch (55).

2. The variable transmission (3) according to claim 1, **characterised in that** each clutch (55) is capable of being maintained in a fully closed state, wherein the respective third member (52) of the respective planetary gear set (50) is prevented from rotating, or in a slipping or fully opened state, wherein the respective third member (52) can rotate relative to the said stationary transmission part (39).

3. The variable transmission (3) according to claim 1 or 2, **characterised in that** each clutch (55) is hydraulically or mechanically controllable.

4. The variable transmission (3) according to claim 1, 2 or 3, **characterised in that** the said first members (51, 52, 53) of each of the planetary gear sets (50) are the sun gears (51) thereof, the said second members (51, 52, 53) of each of the planetary gear sets (50) are the planet carriers (53) thereof and the said third members (51, 52, 53) of each of the planetary gear sets (50) are the ring gears (52) thereof.

5. The variable transmission (3) according to a preceding claim, **characterised in that** the variator unit (40) thereof comprises two adjustable pulleys (42, 43), each pulley (42; 43) provided on and rotating as one with a respective one of the said input shaft (44) and output shaft (45), and a drive belt (41) that wrapped around the pulleys (42, 43) at an adjustable radius at each pulley (42; 43).

6. Method for controlling the variable transmission (3) according to a preceding claim in the electric vehicle, **characterised in that**, when the electric vehicle is cornering while being driven by the electric machine (1), the clutch (55) of the planetary gear set (50) that is associated with the inner driven wheel (2) is controlled to slip, whereas when the electric vehicle is cornering while the electric machine (1) is being driven, the clutch (55) of the planetary gear set (50) that is associated with the outer driven wheel (2) is controlled to slip.

7. Method for controlling the variable transmission (3) according to a claim 6, **characterised in that**, a maximum torque that can be transmitted by either clutch (55) is actively controlled, also when it is maintained in a fully closed state and the third member (51, 52, 53) of the respective planetary gear set (50) is connected to the stationary part (39) of the variable transmission (3).

8. Method for controlling the variable transmission (3) according to a claim 6, **characterised in that** both clutches (55) are controlled to slip when the electric vehicle is cornering.

9. Method for controlling the variable transmission (3) according to a claim 8, **characterised in that** both clutches (55) are controlled to slip also when the electric vehicle is not cornering.
